# NEW EUROPEAN PATENT SPECIFICATION

(11) **EP 0 480 457 B2**
(45) Date of publication and mention of the opposition decision: **29.07.1998**
(45) Mention of the grant of the patent: 17.05.1995
(21) Application number: 91117379.7
(22) Date of filing: 11.10.1991
(51) Int. Cl.: B29C 49/04

(54) **Process for preparing double-wall blow-molded articles having a high stretching ratio and products so obtained**
Verfahren zum Herstellen doppelwandiger blasgeformter Gegenstände mit grossem Streckverhältnis und danach hergestellte Gegenstände
Procédé pour fabriquer des objets moulés par soufflage à double paroi avec un haut rapport d'étirage et objets fabriqués ainsi

(30) Priority: 12.10.1990 IT 2171790
(43) Date of publication of application: 15.04.1992
(73) Proprietor: MONTELL ITALIA S.p.A., 20124 Milano (IT)
(72) Inventor: Addeo, Antonio, I-80035 Nola, Napoli (IT); Biscotti, Aurelio, I-22020 Cerro Maggiore, Milan (IT); Cocca, Vincenzo, I-20032 Cormano, Milan (IT); Pinetti, Lucio, I-20155 Milan (IT)
(74) Representative: Zumstein, Fritz, Dr.

(56) References cited:
- EP-A- 371 341
- DE-A- 1 479 695
- DE-A- 1 479 704
- DE-A- 2 137 103
- DE-C- 3 721 690
- US-A- 3 663 672
- US-A- 3 892 829
- US-A- 4 423 000
- US-A- 4 592 718

## Description

The present invention relates to a process for preparing double-wall blow-molded articles having a high stretching ratio and to the products so obtained. Such a process is known from e.g. US-A-4,423,000.

Further DE-A-14 79 695 discloses a process for blow-molding a double-wall article from a cylindrical parison, wherein the parison is blown after the mold has been closed.

DE-A-14 79 704 describes an extruding apparatus which extrudes directly a cylindrical parison into a mold cavity, whereupon a piston is moved into the mold cavity.

More in particular, the present invention relates to a process for preparing double-wall articles having a high stretching ratio obtained by forming,by means of blowing, a thermoplastic extruded parson, which is contained in a modified mold for blow molding.

The term "double-wall blow-molded articles having a high stretching ratio", whenever used in the present specification and in the claims, means formed bodies or articles of any shape, either circular or polygonal, to be utilized in sectors such as transports, household electrical apparatus and appliances, building, autos, telecommunications, office machines, etc., as doors, covers, casings, in particular for refrigerators or frizers, panels, containers, etc., where the stretching ratio, intended as the ratio between surface of the formed article and starting surface of the tubular extruded body included in the mold, is higher than 3 and preferably ranges from 3.5 to 4.

The technology utilized for producing blown articles having a high stretching ratio, which is known as Stretch Blow Molding, is limited so far to the production of articles having a strictly cylindrical geometry (nearly totally bioriented bottles for drinks additioned with carbon anhydride).

By this method, a polymer extruded in a tubular shape (parison) or an injection molded preform are stretched by means of a pliers system or by means of a piston (in the case of the Injection Blow Molding) in order to impart to the articles, by means of a bi-orientation of the polymeric chains, improved mechanical properties and a lower permeability to gases.

The Applicant has now found a process which represents an extension of said technology to articles having a complexer geometry, in which the stretch is obtained during the mold closing step, by moving said mold.

Thus, object of the present invention is a process for preparing double-wall blow-molded articles having a high stretching ratio.

This object is achieved by the features in claim 1.

Any thermoplastic polymer can be used to prepare the parison; illustrative examples comprise: polystyrene, impact-resistant polystyrene, polystyrene modified with polar monomers such as a acrylonitrile, styrene mixes such as ABS, SAN, etc., polyvinyl chloride, high, mean and low density polyethylene, polypropylene, impact-resistant polypropylene, ethylene/propylene copolymers, acrylic and/or methacrylic resins, polymethacrylates, polyester resins such as PET, PBT, and the like.

Preferred products are polystyrene, impact-resistant polystyrene, styrene mixes, polypropylene and impact-resistant polypropylene.

The parison, which has a preferably round section, has a thickness, which is a function of the shape and size of the article to be produced, but generally ranges from 0.5 to 20 mm; furthermore the parison, to facilitate its thermoforming, is maintained at a temperature, which is above the softening temperature of the polymer which it is made of, generally higher than 100° C, preferably ranging from 120° to 200°C.

The parison is introduced into a mold, which reproduces in negative the shape of the article to be produced. More in particular, the mold is composed of two parts. A part, the concave one, is stiff, while the other is equipped with a movable piston, which can be shaped so as to conform to the concavity of the other half-mold. As an alternative, the piston can consists of a support, on which different templates can be adapted, as a function of the shape of the concavity of the stiff part and, therefore, as the function of the article to be produced.

The blow molding technique is known to those skilled in the art and is described, for example, in Encyclopedia of Polymer Science and Engineering (Second Edition) Wiley Interscience, 1985, Vol. 2. page 447. More in particular, the molding of the parison according to the present invention comprises blowing air or an inert gas, such as nitrogen, into said parson and simultaneously, or almost simultaneously introducing the piston into the cavity of the stiff half-mold.

"Almost simultaneously" means that the piston can move also after a minimum time, approximately ranging from 0.5 to 2 seconds, after the blowing begin.

In order to obtain a more homogeneous distribution or the thermoplastic material inside the cavity, vacuum can be generated, during the molding step, in the concavity of the first half-mold in order to enhance the stretching effect and a correct forming of the outer walls of the article. At the end of the molding step, the article is brought to a temperature suited to the drawing. The double-wall blown articles having a high stretching ratio prepared by means of the above-illustrated process are, moreover, a further object of the present invention.

According to the process of the present invention it is possible to produce double-wall articles having a marked development of the surface perpendicularly to the parison extrusion direction.

Furthermore, the use of a punching half-mold has the advantage of preventing a too early adhesion of the walls of the extruded parison under forming, so permitting the production of blown articles, in which the distance between outer walls and inner walls is very little.

A further advantage deriving from the use of the present process is a considerable reduction of the mold, which, permitting a greater opening of the mold-holding plates, facilitates the drawing of the molded pieces and makes possible shorter closure times and, by consequence, the use of materials having a lower melt strength.

A practical embodiment, which is given as an example but not as a limitation of the present invention is illustrated in the attached drawing, in which:
- figure 1 is a sectional view of the extruded parison positioned in the open mold;
- figure 2 is a sectional view of the closed mold and of the parison, partially formed only by means of blow molding: and
- figure 3 shows the closed mold and the parison, definitively formed by the action of the movable piston.

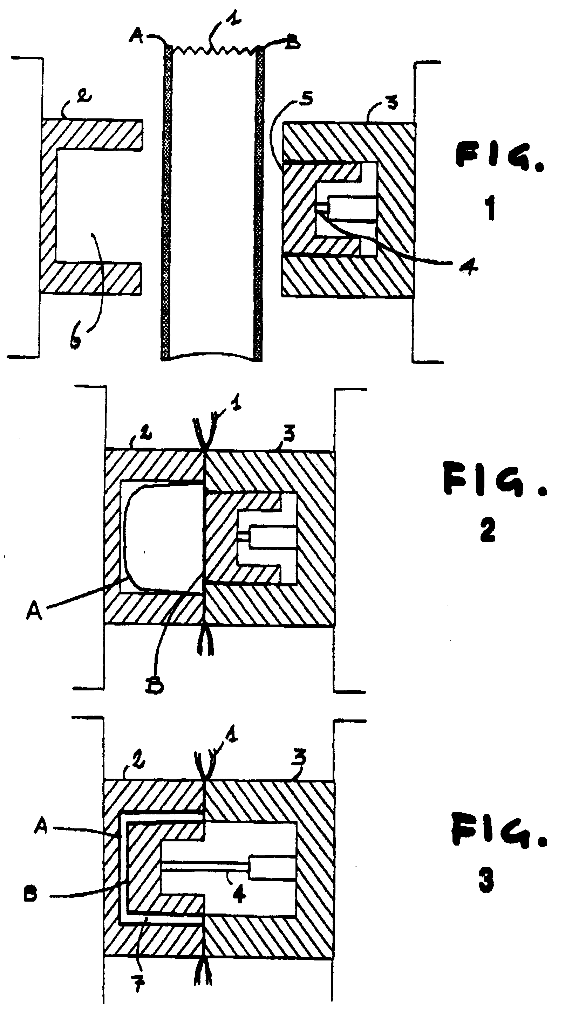

With reference to the figures, the device for practising the process of the present invention comprises a mold, which consists of two parts: a first half-mold (2), concave and rigid, and a second half-mold (3) containing a movable piston (4) supporting a template (5) suited to conform to the cavity (6) of the first half-mold (2). The extruded parson (1), the walls of which are indicated with (A) and (B), is positioned between the two half-molds.

While the article is being formed, the half-molds (2) and (3) are closed, and air is blown into the parison (1) by means of nozzles, which are not shown in the figure. The parison under goes a deformation and conforms to the surface of cavity (6) and to the surface of template (5). Simultaneously, or almost simultaneously with blowing, piston (4) enters the cavity (6), thereby imparting the desired final shape to the article. During the last-mentioned operation, both surfaces (A) and (B) are subjected to stretching. On surface (B), stretching is directly exerted by piston (4), while on surface (A) it is essentially exerted by the pressure of the air, which has remained entrapped in hollow space (7).

When carrying the present invention into effect, various changes, modifications and variations can be brought to the various parts which form the device for preparing double-wall blown articles having a high stretching ratio, which is illustrated, as an example, in the figure of the attached drawing.

## Claims

1. A process for preparing double-wall blow-molded articles having a high stretching ratio, which comprises:
a) extruding a tubular body with an open end made of thermoplastic polymer through an essentially annular extruder;
b) positioning the tubular body into an open mold for blow molding, composed of a first concave half-mold, which partially reproduces the shape of the article to be produced, and of a second half-mold, which comprises a movable piston supporting a template capable of conforming to the concavities of the first half-mold; and
c) closing the mold, wherein the front surface of the template is positioned in the plane of the outer edge of the second-half mold, blow-molding the tubular body, while it is still in a softened state, to expand the tubular body on the side of the first concave half-mold and to press the tubular body against the front surface of the template on the side of the second half-mold, and simultaneously or almost simultaneously introducing the movable piston of the second half-mold into the concavities of the first half-mold.

2. The process according to claim 1, wherein the extruded tubular body is made of polystyrene, impact-resistant polystyrene, styrene mixes, polypropylene and impact-resistant polypropylene.

3. The process according to claim 1 or 2, wherein the extruded tubular body has a thickness, which is a function of the shape and the size of the article to be produced, but generally ranges from 0.5 to 20 mm.

4. The process according to any of the preceding claims, wherein vacuum is generated in the concavity of the first half-mold during the molding step.

## Patentansprüche

1. Verfahren zum Herstellen von doppelwandigen blasgeformten Gegenständen mit einem hohen Streckverhältnis, umfassend:
a) Extrudieren eines rohrförmigen Körpers aus einem thermoplastischen Polymer mit einem offenen Ende durch einen im wesentlichen ringförmigen Extruder,
b) Anordnen des rohrförmigen Körpers in einer offenen Form für die Blasverformung, bestehend aus einer ersten konkaven Halbform, die die Form des zu erzeugenden Gegenstands teilweise reproduziert, und aus einer zweiten Halbform, die einen beweglichen Kolben umfaßt, welcher ein Templat trägt, das zur Anpassung an die Konkavitäten der ersten Halbform in der Lage ist, und
c) Schließen der Form, wobei die vordere Fläche des Templats in der Ebene des äußeren Randes der zweiten Halbform positioniert ist, Blasformen des rohrförmigen Körpers, während er sich noch in erweichtem Zustand befindet, um den rohrförmigen Körper auf der Seite der ersten konkaven Halbform zu expandieren und den rohrförmigen Körper gegen die vordere Fläche des Templats auf der Seite der zweiten Halbform anzudrücken, und gleichzeitiges oder fast gleichzeitiges Einführen des beweglichen Kolbens der zweiten Halbform in die Konkavitäten der ersten Halbform.

2. Verfahren gemäß Anspruch 1, worin der extrudierte, röhrenförmige Körper aus Polystyrol, schlagfestem Polystyrol, Styrolmischungen, Polypropylen und schlagfestem Polypropylen besteht.

3. Verfahren gemäß Anspruch 1 oder 2, worin der extrudierte, röhrenförmige Körper eine Dicke aufweist, die in Abhängigkeit steht zur Form und zur Größe des zu erzeugenden Gegenstands, jedoch im allgemeinen im Bereich von 0,5 bis 20 mm liegt.

4. Verfahren gemäß einem der vorhergehenden Ansprüche, worin in der Konkavität der ersten Halbform während der Formungsstufe ein Vakuum erzeugt wird.

## Revendications

1. Un procédé pour fabriquer des articles à double paroi moulés par soufflage et présentant un rapport d'étirage élevé et qui comprend :
a) l'extrusion d'un corps tubulaire ayant une extrémité ouverte réalisé en polymère thermoplastique, à l'aide d'une extrudeuse sensiblement annulaire ;
b) le placement du corps tubulaire dans un moule ouvert pour réaliser un moulage par soufflage, constitué d'un premier demi-moule concave, qui reproduit partiellement la forme de l'article à fabriquer, et d'un second demi-moule comprenant un piston mobile supportant un gabarit capable de se conformer aux concavités du premier demi-moule; et
c) la fermeture du moule, dans lequel la surface antérieure du gabarit est positionnée dans le plan du bord externe du second demi-moule, et la réalisation du moulage, au moyen d'un moulage par soufflage, du corps tubulaire alors qu'il est encore à l'état ramolli, pour expanser le corps tubulaire du côté du premier demi-moule concave et pour presser le corps tubulaire contre la surface antérieure du gabarit du côté du second demi-moule, et simultanément, ou presque simultanément, l'introduction du piston mobile du second demi-moule dans les concavités du premier demi-moule.

2. Le procédé selon la revendication 1, dans lequel le corps tubulaire extrudé est réalisé en polystyrène, en polystyrène résistant aux chocs, en mélanges de styrène, en polypropylène et en polypropylène résistant aux chocs.

3. Le procédé selon la revendication 1 ou 2, dans lequel le corps tubulaire extrudé présente une épaisseur qui est fonction de la forme et de la taille de l'article à fabriquer, mais qui est généralement comprise entre 0,5 et 20 mm.

4. Le procédé selon l'une quelconque des revendications précédentes, dans lequel la concavité du premier demi-moule est mise en dépression au cours de l'étape de moulage.
